# EUROPEAN PATENT APPLICATION

(11) **EP 2 615 155 A1**
(43) Date of publication of application: **17.07.2013**
(21) Application number: 11822972.3
(22) Date of filing: 03.06.2011
(51) Int. Cl.: C10G 65/04

(54) **METHOD FOR PRODUCING LUBRICATING BASE OIL WITH LOW CLOUD POINT AND HIGH VISCOSITY INDEX**

(30) Priority: 07.09.2010 CN 201010274479
(71) Applicant: Petrochina Company Limited, Dongcheng District, Beijing 100007 (CN); Dalian Institute Of Chemical Physics (DICP) Chinese Academy Of Sciences, Dalian, Liaoning 116023 (CN)
(72) Inventor: HU, Sheng, Beijing 100007 (CN); TIAN, Zhijian, Liaoning 116023 (CN); YAN, Lijun, Beijing 100007 (CN); LI, Wenle, Beijing 100007 (CN); XU, Yunpeng, Liaoning 116023 (CN); CHI, Kebin, Beijing 100007 (CN); MENG, Xiangbin, Beijing 100007 (CN); WANG, Bingchun, Liaoning 116023 (CN); TAN, Mingwei, Beijing 100007 (CN); WANG, Lei, Liaoning 116023 (CN); LIU, Yanfeng, Beijing 100007 (CN); ZHU, Jinling, Beijing 100007 (CN); GAO, Shanbin, Beijing 100007 (CN)
(74) Representative: Meyer-Dulheuer, Karl-Hermann
(86) International application number: PCT/CN2011/000946
(87) International publication number: WO 2012/031449

(57) **Abstract**

The present invention relates to a method for producing lubricating base oil with a low cloud point and a high viscosity index. In the method, a lubricating base oil with a low pour point, a low cloud point and a high viscosity index is produced by a hydrorefining-isomerization/asymmetrical cracking-hydrofinishing in the presence of hydrogen, wherein a highly waxy heavy fraction oil having an initial boiling point of 300°C to 460°C, a wax content of 5% or more, a pour point of -20°C or more and a cloud point of -5°C or more is used as a raw material, and naphtha and middle fraction oil being co-produced. The method is characterized mainly in the high yield of heavy base oil, a low pour point and cloud point, a high viscosity and viscosity index of the base oil.

## Description

### FIELD OF THE INVENTION

The present invention relates to a method for producing a lubricating base oil with a low cloud point (<-5°C) and a high viscosity index (>120).

### BACKGROUND OF THE INVENTION

Patent CN101134910A discloses a method for lowering the pour point and the cloud point of a lubricating oil distillate. In the method, a catalytic dewaxing process is adopted, and the catalyst includes nickel metal as an active component, which is contained in a support of a ZSM-5 molecular sieve. The pour point of a light deasphalted hydrotreated oil can be lowered from 9°C to -24°C, and the cloud point can be lowered from 12°C to -16°C. The method has the following obvious disadvantage: the yield and the viscosity of the base oil product will be greatly decreased when the wax content in the feed stock is high, and the drops of the pour point and the cloud point need to be increased.

Patent CN1524929 discloses a method for lowering the cloud point of a lubricating base oil, in which a lube stock is first subjected to solvent pre-dewaxing, the pour point of the dewaxed oil is -5°C to 15°C; the pre-dewaxed oil is subjected to hydrotreating to reduce the sulfur content and the nitrogen content; the pre-dewaxed oil after hydrotreating is subjected to isodewaxing, to obtain a lubricating base oil with a low cloud point. In order to avoid increase of the severity of the reaction and a resulted severe cracking reaction, in the method, most of the wax needs to be removed through a solvent pre-dewaxing process, and then a hydrotreating and isodewaxing process is performed. The pour point of the dewaxed oil of the method should be not higher than 15°C, otherwise the cloud point of the isomerization product cannot be lowered to less than 0°C, even cannot be lowered to less than 5°C.

US Patent No. US 6,699,385 discloses a method for lowering the cloud point through an isodewaxing process. In order to avoid increase of the severity of the reaction and a resulted severe cracking reaction, the waxy feed stock needs to be first fractionated, and a light fraction is subjected to isodewaxing, and the cloud point can only be decreased to about 0°C.

All the methods for dewaxing a lubricating base oil disclosed in the published patents and documents above do not clarify or imply a method for producing a base oil with a low pour point, a low cloud point and a high viscosity index by an isomerization-asymmetrical cracking reaction process, and compared with the method disclosed in the published patents and documents, the yield of a base oil, especially the yield of a heavy base oil of an isomerization-symmetric cracking reaction process is higher.

### SUMMARY OF THE INVENTION

The present invention is directed to a method for producing a lubricating base oil having a low cloud point (<-5°C) and a high viscosity index (>120), wherein a highly waxy heavy fraction oil having an initial boiling point of 300°C to 460°C, a wax content of 5% or more, a pour point of -20°C or more and a cloud point of -5°C or more is used as raw material to produce a API (American Petroleum Institute) II, III (see the classification standard in Table 1) type lubricating base oil having a low pour point and a high viscosity index by a hydrogenation pre-refining-isomerization/asymmetrical cracking-supplementary refining three-stage hydrogenation process.

The production method provided by the present invention includes: (1) a hydrorefining process: at a certain hydrogen pressure, a waxy feed stock contacts a hydrorefining catalyst and is subjected to desulfurization, denitrogenation, aromatic saturation and an ring-opening reaction, products of the hydrorefining reaction are separated by a stripping column, and the bottom fraction enters a hydroisomerization/asymmetrical cracking process; (2) a hydroisomerization/asymmetrical cracking process: at a certain hydrogen pressure, a bottom product of the stripping column contacts an isomerization-asymmetrical cracking catalyst and is subjected to isomerization-asymmetrical cracking and a hydrogenation saturation reaction, to obtain a product having a low pour point, a low cloud point, a low aromatic content and a high viscosity index, and then all the product directly enters a hydrofinishing process; (3) a hydrofinishing process: at a certain hydrogen pressure, the isomerization-asymmetrical cracking reaction product contacts a hydrofinishing catalyst and is subjected to a hydrogenation saturation reaction, to obtain a hydrofinishing oil having good light stability and thermal stability; and (4) a product separation process: the product obtained in the hydrofinishing process is separated into a gas phase product and a liquid phase product by a hot high-pressure separator and a cold low-pressure separator, the liquid product passes through a normal-pressure fractionating column and a reduced-pressure fractionating column to extract naphtha, kerosene, diesel oil and light, middle and heavy lubricating base oil having a low pour point and a high viscosity index.

According to the method of the present invention, the feed stock includes anyone of furfural refined oil, foots oil, cerate (soft wax), propane deasphalted oil (DAO), hydrocracking unconverted oil (UCO), Fischer-Tropsch wax, vacuum gas oil and other waxy oils or a mixture thereof.

According to the method of the present invention, the hydrorefining catalyst includes 60 wt% to 90 wt% of one or more of alumina, silica and titania, and 10 wt% to 40 wt% of one or more of molybdenum trioxide, tungsten trioxide, nickel oxide and cobalt oxide.

According to the method of the present invention, before use, the hydrorefining catalyst is pre-sulfurated by hydrogen sulfide or sulfur-containing feed stock at a temperature of 150 to 350°C in the presence of hydrogen. This type of pre-vulcanization may be carried out ex situ or in situ.

According to the method of the present invention, the hydrorefining process conditions are: reaction temperature: 350°C to 410°C, hydrogen partial pressure: 10 MPa to 18 MPa, space velocity (LHSV): 0.5 h⁻¹ to 2.0 h⁻¹, and volume ratio of hydrogen to oil: 300 Nm³/m³ to 1000 Nm³/m³.

According to the method of the present invention, the oil obtained by stripping separation of the hydrorefining product has a total sulfur content of no higher than 10 µg/g and a total nitrogen content of no higher than 5 µg/g.

According to the method of the present invention, the isomerization-asymmetrical cracking catalyst is at least one of the following one-dimensional 10-membered ring mesoporous composite molecular sieves: a ZSM-22/ZSM-23 composite molecular sieve, a ZSM-23/ZSM-22 composite molecular sieve, a ZSM-5/SAPO-11 composite molecular sieve, a ZSM-22/SAPO-11 composite molecular sieve, a ZSM-23/SAPO-11 composite molecular sieve, an EU-1/SAPO-11 composite molecular sieve, and a NU-87/SAPO-11 composite molecular sieve. The content of the molecular sieve is 40% to 80%, and the rest is alumina and at least one group VIII noble metal, where the noble metal is Pt and/or Pd and has a content of 0.3 wt% to 0.6 wt%. The average pore diameter of the catalyst is 0.3 nm to 0.8 nm, the average pore volume is 0.1 ml/g to 0.4 ml/g, and the BET specific surface area is 120 m²/g to 300 m²/g.

According to the method of the present invention, before use, the isomerization/asymmetrical cracking catalyst needs to be pre-reduced at a temperature of 150 to 450°C in the presence of hydrogen.

According to the method of the present invention, the isomerization/asymmetrical cracking process conditions are: reaction temperature: 260°C to 410°C, hydrogen partial pressure: 10 MPa to 18 MPa, volume space velocity: 0.5 h⁻¹ to 3.0 h⁻¹, volume ratio of hydrogen to oil: 300 Nm³/m³ to 1000 Nm³/m³.

According to the method of the present invention, the hydrofinishing catalyst includes amorphous silica-alumina and at least one group VIII noble metal.

According to the method of the present invention, the hydrofinishing catalyst has a ratio of SiO₂ : Al₂O₃ of 1 : 1 to 9, an average pore radius of 1.0 nm to 5.0 nm, a pore volume of 0.3 ml/g to 1.0 ml/g, and a BET specific surface area of 260 m²/g to 450 m²/g. The noble metal is Pt and/or Pd, and the content of the noble metal is 0.3 wt% to 0.6 wt%.

According to the method of the present invention, before use, the hydrofinishing catalyst is generally pre-reduced at a temperature of 150°C to 450°C in the presence of hydrogen.

According to the method of the present invention, the hydrofinishing reaction conditions are: reaction temperature: 180°C to 320°C, hydrogen partial pressure: 10 MPa to 18 MPa, volume space velocity: 0.5 h⁻¹ to 3.0 h⁻¹, volume ratio of hydrogen to oil: 300 Nm³/m³ to 1000 Nm³/m³.

According to the method of the present invention, the normal-pressure distillation and reduced-pressure distillation process are to separate the oil mixture after supplementary refining by normal-pressure distillation and reduced-pressure distillation, to obtain a naphtha, a middle fraction oil and a lubricating base oil.

### BRIEF DESCRIPTION OF THE DRAWINGS

Fig. 1 shows product distribution of Example 1 and Comparative Example 1.
Fig. 2 shows product distribution of Example 2 and Comparative Example 2.
Fig. 3 is a flowchart of an isomerization-asymmetrical cracking/supplementary refining process of a lubricating base oil.
Fig. 4 is a flowchart of a hydrorefining/isodewaxing/hydrofinishing process of a lubricating base oil.
Fig. 5 is a flowchart of a hydrorefining/isomerization-asymmetrical cracking /hydrofinishing process of a lubricating base oil.
Fig. 6 is a flowchart of an isomerization-asymmetrical cracking/hydrofinishing process of a lubricating base oil.

### PREFERRED EMBODIMENTS

### EXAMPLES

The present invention is further described with the following examples.

The hydrorefining catalyst and the supplementary refining catalyst used in the examples of the present invention and preparation method thereof are briefly described as follows:
Same hydrorefining catalyst and hydrofinishing catalyst are used in the examples and comparative examples of the present invention. The hydrorefining catalyst is prepared according to the following process: pseudo-boehmite having an appropriate pore structure is selected and used to prepare a strip-like support having a clover-shaped cross section, after the support is dried and baked, Ni element and Mo element are loaded on the alumina support by an impregnation method, and then dried and baked to obtain a hydrorefining catalyst, wherein the NiO content is 4.20%, the MoO₃ content is 18.3%, and the rest is alumina, the specific surface area is 175 m²/g, and the pore volume is 0.45 cm³/g.

The isomerization/asymmetrical cracking catalyst used in the examples is a 0.5% Pt/ZSM-22/SAPO-11 catalyst prepared according to the method described in Example 12 of patent CN 1762594A.

In a method for preparing the hydrofinishing catalyst, amorphous silica-alumina used as support is prepared by using cocurrent flow fixed pH value and silica-alumina coprecipitation. After being dried and baked, the support is squeezed into a strip having a clover-shaped cross section, and dried and baked, and then metal Pt is loaded by an impregnation method, and then dried and baked to obtain a hydrofinishing catalyst, wherein the Pt content is 0.51%, the rest is silica and alumina, the ratio of SiO₂ : Al₂O₃ is 1 : 6.3, the specific surface area is 305 cm²/g, and the pore volume is 1.08 cm³/g.

### Comparative Example 1

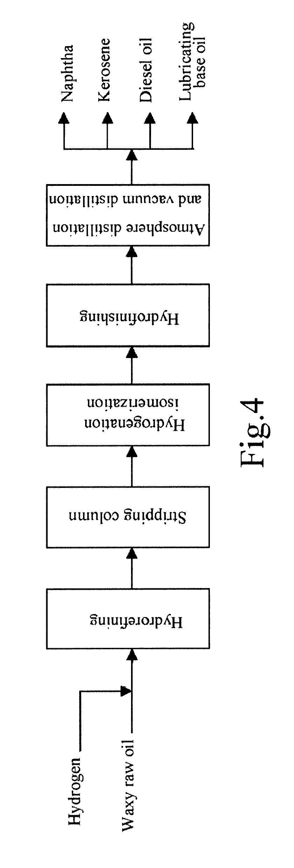

A SAPO-11 molecular sieve was synthesized by a method described in Example 18 of US4440871. Pseudo-boehmite is incorporated into a SAPO-11 molecular sieve powder in a ratio of 70% SAPO-11 molecular sieve to 30% pseudo-boehmite, and then a small amount of an adhesive such as an aqueous solution of HNO₃ was added, blended and shaped into a strip of ϕ1.2 mm, baked at 110°C for 24 hours and at 600°C for 24 hours, and pulverized into particles having a length of 1 mm to 2 mm. A sufficient amount of support particles was impregnated in a suitable amount of a Pt(NH₃)₄Cl₂ solution having a concentration of 3% for 16 hours by a common pore filling impregnation method, and then dried at 120°C for 4 hours and baked at 480°C for 8 hours. 200 ml of the prepared catalyst was pre-reduced by pure hydrogen in situ on a high-pressure hydrogenation reaction experimental device having a catalyst load of 200 ml to obtain a 0.5% Pt/SAPO-11 catalyst. The isodewaxing catalyst reduction conditions are: hydrogen flow rate: 2000 mL/h, the temperature was raised to 250°C at a rate of 5°C/min and maintained at 250°C for 2 hours. Then, the temperature was raised to 450°C at a rate of 5°C/min and maintained at 450°C for 2 hours, and the reaction temperature was adjusted in a hydrogen flow. The hydrogenation pre-refining-isodewaxing-hydrofinishing process shown in Fig. 4 and the process conditions shown in Table 3 were adopted, paraffin base 650N furfural refined oil was used as a raw material, of which the physical and chemical properties are shown in Table 2. The hydrorefining catalyst and the supplementary refining catalyst were the same as the catalysts used in the examples mentioned above.

### Example 1

According to the process shown in Fig. 4, the experimental device and the feed stock were the same as those in Comparative Example 1. The other reaction conditions were the same as those in Comparative Example 1 except that the reaction temperature of isomerization/asymmetrical cracking was 351°C, and the space velocity was 0.75h⁻¹. The reaction conditions of Comparative Example 1 are shown in Table 3.

Product distribution comparison of Example 1 and Comparative Example 1 is shown in Table 4, and main product properties are shown in Table 5.

According to the process shown in Fig. 4, paraffin base 200SN lightly dewaxed oil was used as a feed stock in the experimental device of Comparative Example 1, and the physical and chemical properties of the feed stock are shown in Table 2. The reaction conditions are shown in Table 3.

**Table 2 Properties of feed stocks of Comparative Example 1 and Example 1**

| Item | 650SN Furfural Refined Oil | Analysis Method |
|---|---|---|
| 20°C Density, g/cm³ | 0.8721 | GB/T 1884 |
| Kinematic Viscosity (100°C), mm²/s | 10.16 | GB/T 265 |
| Kinematic Viscosity (40°C), mm²/s | - | GB/T 265 |
| Viscosity Index | - | GB/T 1995 |
| Pour Point, °C | 60 | GB/T 3535 |
| Cloud Point, °C | >60 | GB/T 6986-86 |
| Sulfur Content, µg/g | 607 | ASTM D2622 |
| Nitrogen Content, µg/g | 322 | ASTM D5762 |
| Composition, % | | SH/T0753 |
| Saturated Hydrocarbons | 86.08 | |
| Aromatic Hydrocarbons | 13.58 | |
| Colloid + Asphaltene | 0.34 | |
| Distillation Range, °C HK | 421 | ASTM D2887 |
| 5% | 477 | |
| 10% | 498 | |
| 30% | 516 | |
| 50% | 525 | |
| 70% | 533 | |
| 90% | 541 | |
| 95% | 550 | |
| KK | 557 | |

**Table 3 Reaction conditions adopted in Comparative Example 1 and Example 1**

| | Hydrorefining | | Isomerization | | Hydrofinishing | |
|---|---|---|---|---|---|---|
| | Comparative Example 1 | Example 1 | Comparative Example 1 | Example 1 | Comparative Example 1 | Example 1 |
| Average Temperature, ° C | 370 | 370 | 378 | 351 | 230 | 230 |
| Hydrogen Partial Pressure, MPa | 13 | 13 | 12 | 12 | 12 | 12 |
| Liquid hourly Volume Space Velocity, h⁻¹ | 0.90 | 1.00 | 0.70 | 0.75 | 1.50 | 1.50 |
| Raito of Hydrogen to Oil, Nm³/m³ | 500 | 500 | 500 | 500 | 500 | 500 |

**Table 4 Product distribution of Comparative Example 1 and Example 1**

| Product | Yield, % | |
|---|---|---|
| | Example 1 | Comparative Example 1 |
| Fuel Gas + Naphtha | 19.96 | 15.71 |
| Diesel Oil | 2.96 | 11.58 |
| 2cst Base Oil | 3.78 | 24.86 |
| 5cst Base Oil | 0 | 4.49 |
| 10cst Base Oil | 73.30 | 47.85 |
| Total Base Oil Yield | 77.08 | 72.71 |

**Table 5 Properties of heavy base oil products of Comparative Example 1 and Example 1**

| Analysis Item | Comparative Example 1 | Example 1 | Analysis Method |
|---|---|---|---|
| Initial Boiling Point, °C | 421 | 385 | GB/T 9168 |
| 20°C Density, g/cm³ | 0.8424 | 0.8524 | GB/T 1884 |
| Pour Point, °C | -15 | -15 | GB/T 3535 |
| Cloud Point, °C | 5 | -6 | GB/T 6986-86 |
| Aromatic Content, % | 1.2 | 0 | |
| Open Flash Point, °C | 265 | 270 | GB/T 3536 |
| Chroma, number | +30 | +30 | GB/T 3555 |
| Kinematic Viscosity (40°C), mm²/s | 60.89 | 61.06 | GB/T 265 |
| Kinematic Viscosity (100°C), mm²/s | 9.313 | 9.423 | GB/T 265 |
| Viscosity Index | 132 | 136 | GB/T 1995 |

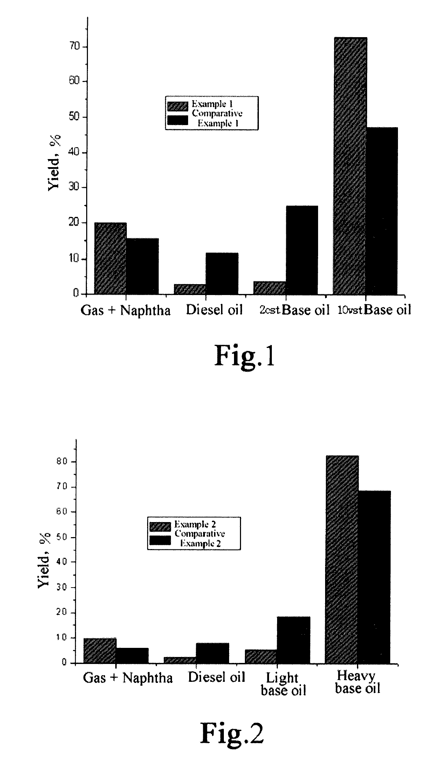

It can be seen from Tables 2 to 5 and Fig. 1 that, the pour point of the feed stock used in the hydrorefining, isomerization-asymmetrical cracking, hydrofinishing process in Example 1 is up to 60°C, indicating that the feed stock contains a large amount of high-carbon-number wax molecules. In the method of Example 1 and Comparative Example 1, the hydrocracking reaction occurs simultaneously with isomerization. However, different from the conventional hydrocracking reaction of Comparative Example 1, Example 1 has significant features of an asymmetrical cracking reaction, that is, the cleavage of a C-C bond preferably occurs at a position close to two ends of a long-chain paraffin, so that the yields of both small-molecule products (gas and naphtha) and big-molecule products (10cst base oil) are high, and are up to 19.96% and 73.3%, respectively, while the yields of diesel oil and light base oil (2cst base oil) are only 2.96% and 3.78% respectively. The cracking reaction in the method of Comparative Example 1 occurs at a position close to the center of a long-chain paraffin, so that the yields of both small-molecule products (gas + naphtha) and big-molecule products (10cst base oil) are 15.71% and 47.85% respectively, which are both lower than those in Example 1, and the yields of diesel oil and light base oil (2cst base oil) are 11.58% and 24.86% respectively, which are both higher than those in Example 1. At the same time, the cloud point of the heavy base oil product of Example 1 is 11°C lower than that of the heavy base oil product of Comparative Example 1. The viscosity index of the heavy base oil product of Example 1 is higher than that of the heavy base oil product of Comparative Example 1 by 4%.

### Comparative Example 2

A ZSM-22 molecular sieve was synthesized by the method described in Example 2 of US5783168. Pseudo-boehmite is incorporated into a ZSM-22 molecular sieve powder in a ratio of 70% ZSM-22 molecular sieve to 30% pseudo-boehmite, and then a small amount of an adhesive such as an aqueous solution of HNO₃ was added, blended and shaped into a strip of ϕ1.2 mm, baked at 110°C for 24 hours and at 600°C for 24 hours, and breaked into particles having a length of 1 mm to 2 mm. A sufficient amount of support particles was impregnated in a suitable amount of a Pt(NH₃)₄Cl₂ solution having a concentration of 3% for 16 hours by a common pore filling impregnation method, and then dried at 120°C for 4 hours and baked at 480°C for 8 hours. 200 ml of the prepared catalyst was pre-reduced by pure hydrogen in situ in a high-pressure hydrogenation reaction experimental device having a catalyst load of 200 ml to obtain 0.5% of Pt/ZSM-22. The catalyst reduction conditions were the same as those in Comparative Example 1. A paraffin base 200SN dewaxed oil was used as a raw material, the physical and chemical properties thereof are shown in Table 6, and a hydrorefining-isodewaxing-hydrofinishing series process (shown in Fig. 4) and process conditions shown in Table 7 were adopted.

### Example 2

The process, experimental device and feed stock were the same as those in Comparative Example 2. The other reaction conditions were the same as those in Comparative Example 2 except that the temperature of the isomerization/asymmetrical cracking reaction was 325°C, and the liquid hourly space velocity was 1.2h⁻¹.

The product distributions of the reactions of Example 2 and Comparative Example 2 are shown in Table 8, and main properties of the products are shown in Table 9.

It can be seen from Tables 6 to 9 and Fig. 2 that compared with Comparative Example 2, the method of Example 2 has significant features of a hydrorefining-isomerization/asymmetrical cracking-hydrofinishing, that is, the yield of a heavy base oil (5cst base oil) is high, and the yields of small-molecule products (gas and naphtha) and big-molecule products (10cst base oil) are both high, and are up to 19.96% and 73.3% respectively, the yields of diesel oil and a light base oil (2cst base oil) are merely 2.96% and 3.78% respectively. The product distribution is in a bimodal distribution. At the same time, it can be seen that, the cloud point of the heavy base oil product of Example 2 is 10°C lower than that of the heavy base oil product of Comparative Example 2.

**Table 6 Feed stock properties**

| Item | 200SN Lightly Dewaxed Oil | Analysis Standard |
|---|---|---|
| 20°C Density, g/cm³ | 0.8797 | GB/T 1884 |
| Kinematic Viscosity (100°C), mm²/s | 6.277 | GB/T 265 |
| Kinematic Viscosity (40°C), mm²/s | 40.34 | GB/T 265 |
| Viscosity Index | 103 | GB/T 1995 |
| Pour Point, °C | -3 | GB/T 3535 |
| Cloud Point, °C | 15 | GB/T 6986-86 |
| Sulfur Content, µg/g | 420 | ASTM D2622 |
| Nitrogen Content, µg/g | 144 | ASTM D5762 |
| Composition, % | | SH/T0753 |
| Saturated Hydrocarbons | 88.23 | |
| Aromatic Hydrocarbons | 11.44 | |
| Colloid + Asphaltene | 0.33 | |
| Distillation Range, °C HK | 373 | ASTM D2887 |
| 5% | 404 | |
| 10% | 414 | |
| 30% | 429 | |
| 50% | 441 | |
| 70% | 453 | |
| 90% | 478 | |
| 95% | 487 | |
| KK | 491 | |

**Table 7 Reaction conditions of Comparative Examples 1 and 2**

| | Hydrorefining | | Isomerization | | Hydrofinishing | |
|---|---|---|---|---|---|---|
| | Comparative Example 2 | Example 2 | Comparative Example 2 | Example 2 | Comparative Example 2 | Example 2 |
| Average Temperature, ° C | 368 | 368 | 360 | 325 | 230 | 230 |
| Hydrogen Partial Pressure, MPa | 13 | 13 | 12 | 12 | 12 | 12 |
| Liquid hourly Volume Space Velocity, h⁻¹ | 1.0 | 1.0 | 0.9 | 1.2 | 1.5 | 1.5 |
| Raito of Hydrogen to Oil, Nm³/m³ | 500 | 500 | 500 | 500 | 500 | 500 |

**Table 8 Product distribution of Examples 1 and 2 and Comparative Examples 1 and 2**

| Product | Yield, % | |
|---|---|---|
| | Comparative Example 2 | Example 2 |
| Gas + Naphtha | 8.85 | 9.74 |
| Diesel | 8.09 | 2.44 |
| 2cst Base Oil | 18.35 | 5.14 |
| 5cst Base Oil | 67.71 | 82.68 |
| Total Base Oil Yield | 86.06 | 88.82 |

**Table 9 Properties of heavy base oil products of Comparative Example 2 and Example 2**

| Analysis Item | Comparative Example 2 | Example 2 | Analysis Method |
|---|---|---|---|
| Initial Boiling Point, °C | 400 | 394 | GB/T 9168 |
| 20°C Density, g/cm³ | 0.8521 | 0.8629 | GB/T 1884 |
| Pour Point, °C | -18 | -21 | GB/T 3535 |
| Cloud Point, °C | -5 | -15 | GB/T 6986-86 |
| Open Flash Point, °C | 220 | 235 | GB/T 3536 |
| Chroma, number | +30 | +30 | GB/T 3555 |
| Kinematic Viscosity (40°C), mm²/s | 34.56 | 39.39 | GB/T 265 |
| Kinematic Viscosity, (100°C), mm²/s | 5.713 | 6.273 | GB/T 265 |
| Viscosity Index | 104 | 105 | GB/T 1995 |

### Example 3

According to the process shown in Fig. 4, the experimental device is the same as that in Comparative Example 1, and the feed stock is a 100N cerate obtained from crude oil by processes of reduced-pressure distillation, furfural refining and acetone - toluene dewaxing, of which the physical and chemical properties are shown in Table 10. Under the process conditions shown in Table 11, the resulting product distribution is shown in Table 12, and the main properties of the products are shown in Table 13.

### Example 4

According to the process shown in Fig. 4, the experimental device is the same as that in Comparative Example 1, and the feed stock is a 400N cerate shown in Table 10. Under the process conditions shown in Table 11, the resulting product distribution is shown in Table 12, and the main properties of the products are shown in Table 13.

It can be seen from Tables 10 to 13 that the distribution of the product of the isomerization/asymmetrical cracking in Example 3 is similar to those of the products of isomerization/asymmetrical cracking in Examples 1 and 2, the product mainly includes light component products (gas and naphtha) and a 2cst base oil product, and the yields of the two products are 17.32% and 70.83% respectively, and the diesel yield is 11.87%, indicating a bimodal distribution of a high yield of the light component product and the heavy component product and a low yield of the middle fraction. The product distribution in Example 4 is similar to that in Example 3, and the feature of bimodal distribution is more significant. The pour points and the cloud points of the 2cst and 6cst base oil products of Examples 3 and 4 are very low, and the viscosity index of the 6cst base oil is up to 123, which meets the requirements of API Group III base oil.

**Table 10 Properties of feed stocks of Examples 3 and 4**

| Analysis Item | 100N Cerate | 400N Cerate |
|---|---|---|
| Density (20°C), g/cm³ | 0.8319 | 0.8643 |
| Kinematic Viscosity (40°C), mm²/s | 8.292 | 41.77 |
| Kinematic Viscosity (100°C), mm²/s | 2.476 | 7.205 |
| Viscosity Index | 128 | 136 |
| Pour Point, °C | 27 | 33 |
| Sulfur Content, µg/g | 490 | 534 |
| Nitrogen Content, µg/g | 176 | 430 |

| Composition, % | | |
|---|---|---|
| Saturated Hydrocarbons | 90.11 | 83.51 |
| Aromatic Hydrocarbons | 9.17 | 15.35 |
| Polar Compounds | 0.72 | 1.14 |
| Distillation Range, °C HK | 307 | 370 |
| 5% | 342 | 422 |
| 10% | 348 | 450 |
| 30% | 358 | 469 |
| 50% | 367 | 477 |
| 70% | 376 | 486 |
| 90% | 386 | 498 |
| 95% | 392 | 505 |
| KK | 404 | 510 |

**Table 11 Process conditions of Examples 3 and 4**

| Process Conditions | Hydrorefining | | Isomerization-Asymmetrical Cracking | | Hydrofinishing | |
|---|---|---|---|---|---|---|
| | Example 3 | Example 4 | Example 3 | Example 4 | Example 3 | Example 4 |
| Average Temperature, °C | 365 | 370 | 320 | 360 | 230 | 230 |
| Hydrogen Partial Pressure, MPa | 13.0 | 13.0 | 12.0 | 12.0 | 12.0 | 12.0 |
| Volume Space Velocity, h⁻¹ | 1.0 | 1.0 | 0.8 | 0.5 | 1.33 | 0.83 |
| Raito of Hydrogen to Oil, Nm³/Nm³ | 350 | 560 | 350 | 560 | 350 | 560 |

**Table 12 Product distributions of Examples 3 and 4**

| Product | Yield, % | |
|---|---|---|
| | Example 3 | Example 4 |
| Gas + Naphtha | 17.32 | 16.54 |
| Diesel | 11.87 | 5.81 |
| 2cst Base Oil | 70.81 | - |
| 6cst Base Oil | - | 77.65 |
| 10cst Base Oil | - | - |
| Total Base Oil Yield | 70.81 | 77.65 |

**Table 13 Properties of base oil products of Examples 3 and 4**

| Feed stock | 100N Cerate | 400N Cerate | Analysis Method |
|---|---|---|---|
| Product | 2cst base oil | 6cst base oil | |
| Density (20°C), g/cm³ | 0.8340 | 0.8504 | GB/T 1884 |
| Pour Point, °C | -25 | -30 | GB/T 3535 |
| Cloud Point, °C | -15 | -19 | GB/T 6986-86 |
| Open Flash Point, °C | 176 | 214 | GB/T 3536 |
| Chroma, number | +30 | +30 | GB/T 3555 |
| Kinematic Viscosity (40°C), mm²/s | 9.520 | 35.34 | GB/T 265 |
| Kinematic Viscosity (100°C), mm²/s | 2.588 | 6.168 | GB/T 265 |
| Viscosity Index | 102 | 123 | GB/T 1995 |

### Example 5

According to the process shown in Fig. 4, the experimental device is the same as that in Comparative Example 1, and the feed stock is a 650N cerate shown in Table 9, which is a waxy oil obtained from crude oil by processes of reduced-pressure distillation, furfural refining and acetone - toluene dewaxing, and the physical and chemical properties. Under the process conditions shown in Table 14, the resulting product distribution is shown in Table 15, and the main properties of the products are shown in Table 16.

### Example 6

According to the process shown in Fig. 4, the experimental device is the same as that in Comparative Example 1, and the feed stock is a 150BS cerate, which is a waxy oil obtained from paraffin-based crude oil by processes of reduced-pressure distillation, propane deasphalting, furfural refining and acetone - toluene dewaxing, and the physical and chemical properties thereof are shown in Table 14. Under the process conditions shown in Table 15, the resulting product distribution is shown in Table 16, and the main properties of the products are shown in Table 17.

It can be seen from Tables 14 to 17 that the fractions of 650SN cerate and 150BS cerate are very heavy, and the pour points thereof are very high. With regard to the two types of heavy and waxy feed stocks, the reduction of the pour point of the base oil needs to be up to 78°C to achieve a pour point of base oil of no higher than -15°C. The features of high yields of small-molecule products (gas and naphtha) and big-molecule products (8cst and 20cst base oils) generated by the hydrorefining-isomerization/asymmetrical cracking-hydrofinishing and low yield of the middle fraction oil (diesel + 2cst base oil) are significant. The viscosity index of the heavy product having a low pour point is extremely high, which can be up to 140, and the pour point and the cloud point of the heavy product can be decreased to a very low level.

**Table 14 Properties of feed stocks of Examples 5 and 6**

| Analysis Item | 650N Cerate | 150BS Cerate | Analysis Standard |
|---|---|---|---|
| Kinematic Density (20°C), g/cm³ | 0.8646 | 0.8710 | GB/T 1884 |
| Kinematic Viscosity (40°C), mm²/s | - | - | GB/T 265 |
| Kinematic Viscosity (100°C), mm²/s | 9.359 | 25.10 | GB/T 265 |
| Pour Point, °C | 63 | 57 | GB/T 3535 |
| Sulfur Content, µg/g | 690 | 752 | ASTM D2622 |
| Nitrogen Content, µg/g | 517 | 674 | ASTM D5762 |
| Composition, % | | | |
| Saturated Hydrocarbons | 87.65 | 69.1 | SH/T0753 |
| Aromatic Hydrocarbons | 11.31 | 23.0 | |
| Polar compounds | 1.04 | 7.9 | |
| Simulated Distillation, °C HK | 380 | 410 | |
| 5% | 480 | 465 | |
| 10% | 505 | 507 | |
| 30% | 522 | 562 | |
| 50% | 540 | 609 | ASTM D2887 |
| 70% | 551 | 667 | |
| 90% | 565 | - | |
| 95% | 569 | - | |
| KK | 589 | - | |

**Table 15 Process conditions of Examples 5 and 6**

| Reaction Conditions | Hydrorefining | | Isomerization-Asymmetrica 1 Cracking | | Hydrofinishing | |
|---|---|---|---|---|---|---|
| | Example 5 | Example 6 | Example 5 | Example 6 | Example 5 | Example 6 |
| Average Temperature, ° C | 370 | 370 | 350 | 375 | 230 | 230 |
| Hydrogen Partial Pressure, MPa | 14.5 | 14.5 | 14.0 | 14.0 | 14.0 | 14.0 |
| Liquid hourly Volume Space Velocity, h⁻¹ | 0.75 | 0.75 | 0.5 | 0.5 | 1.25 | 1.25 |
| Raito of Hydrogen to Oil, Nm³/Nm³ | 750 | 750 | 750 | 750 | 750 | 750 |

**Table 16 Product distributions of Examples 5 and 6**

| Product | Yield, % | |
|---|---|---|
| | Example 5 | Example 6 |
| Fuel Gas + Naphtha | 19.31 | 18.76 |
| Diesel | 4.03 | 2.13 |
| 2cst Base Oil | 8.77 | 3.43 |
| 6cst Base Oil | - | 14.77 |
| 8cst Base Oil | 67.89 | - |
| 20cst base oil | - | 60.91 |
| Total Base Oil Yield | 76.66 | 79.11 |

**Table 17 Properties of heavy base oil products of Examples 5 and 6**

| Feed stock | 650N Cerate | 150BS Cerate | Analysis Method |
|---|---|---|---|
| Product Properties | 10cst base oil | 20cst base oil | |
| Density (20°C), g/cm³ | 0.8495 | 0.8542 | GB/T 1884 |
| Pour Point, °C | -19 | -18 | GB/T 3535 |
| Cloud Point, °C | -8 | -6 | GB/T 6986-86 |
| Open Flash Point, °C | 268 | 293 | GB/T 3536 |
| Chroma, number | +30 | +30 | GB/T 3555 |
| Kinematic Viscosity (40°C), mm²/s | 45.17 | 151.1 | GB/T 265 |
| Kinematic Viscosity (100°C), mm²/s | 8.050 | 19.08 | GB/T 265 |
| Viscosity Index | 152 | 144 | GB/T 1995 |

### Example 7

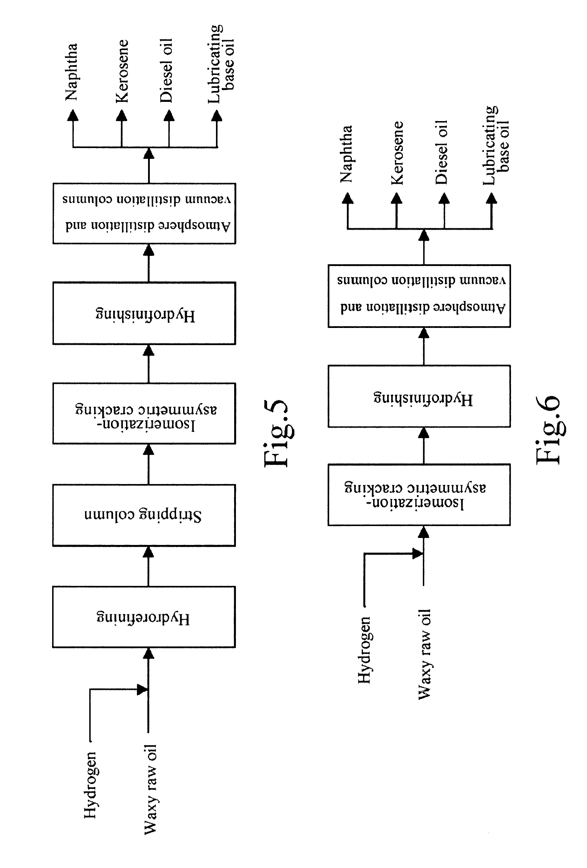

A hydrocracking UCO is a heavy fraction oil generated from a reduced-pressure fraction oil by a hydrorefining-hydrocracking reaction, the impurities such as sulfur and nitrogen have been removed, and most of the aromatic hydrocarbons have been subjected to hydrosaturation and ring-opening, such that the hydrocracking UCO needs not to be subjected to a hydrorefining reaction to remove sulfur and nitrogen, and needs not to be subjected to a hydrorefining- reaction to improve the viscosity index, and the isomerization-asymmetrical cracking/hydrofinishing shown in Fig. 6 can be adopted. Hydrogenation evaluation was performed on the experimental device, and a hydrocracking UCO having the physical and chemical properties shown in Table 18 was uses as a feed stock. Under the process conditions shown in Table 19, the resulting product distribution is shown in Table 20, and main properties of the product are shown in Table 21. It can be seen from Tables 18 to 21 that the hydrocracking UCO has a low sulfur content and nitrogen content, and a high viscosity index and pour point. After an isomerization-asymmetrical cracking/hydrofinishing with mild process conditions, the product distribution has features of high yields of small-molecule products (gas and naphtha) and big-molecule products (8cst and 20cst base oils) and low yield of the middle fraction oil (diesel + 2cst base oil), and the cloud point of the product achieves -15°C.

**Table 18 Properties of the feed stock of Example 7**

| Analysis Item | Hydrocracking UCO | Analysis Standard |
|---|---|---|
| Kinematic Density (20°C), g/cm³ | 0.8245 | GB/T 1884 |
| Kinematic Viscosity (40°C), mm²/s | 15.74 | GB/T 265 |
| Kinematic Viscosity (100°C), mm²/s | 3.824 | GB/T 265 |
| Viscosity Index | 139 | GB/T 1995 |
| Pour Point, °C | 33 | GB/T 3535 |
| Sulfur Content, µg/g | 2.787 | ASTM D2622 |
| Nitrogen Content, µg/g | 1.778 | ASTM D5762 |
| Composition, % | | SH/T0753 |
| Saturated Hydrocarbons | 98.75 | |
| Aromatic Hydrocarbons | 1.11 | |
| Polar Compounds | 0.14 | |
| Distillation Range, °C HK | 331 | ASTM D2887 |
| 5% | 367 | |
| 10% | 375 | |
| 30% | 392 | |
| 50% | 409 | |
| 70% | 433 | |
| 90% | 473 | |
| 95% | 491 | |
| KK | 516 | |

**Table 19 Process conditions of Example 7**

| Process Conditions | Isomerization-Asymmetrical Cracking | Hydrofinishing |
|---|---|---|
| Average Temperature, °C | 310 | 230 |
| Hydrogen Partial Pressure, MPa | 12.4 | 12.4 |
| Liquid Hourly Volume Space Velocity, h⁻¹ | 1.0 | 1.7 |
| Raito of Hydrogen to Oil, Nm³/Nm³ | 350 | 350 |

**Table 20 Product distribution of Example 7**

| Product | Product Yield, % |
|---|---|
| Fuel Gas + Naphtha | 15.9 |
| Diesel | 4.66 |
| 2cst Base Oil | 1.09 |
| 4cst Base Oil | 78.35 |
| Total Base Oil Yield | 79.44 |

**Table 21 Properties of the 4cst base oil product of Example 7**

| Analysis Item | 4cst Base Oil | Analysis Method |
|---|---|---|
| Density (20°C), g/cm³ | 0.8288 | GB/T 1884 |
| Pour Point, °C | -18 | GB/T 3535 |
| Cloud Point, °C | -15 | GB/T 6986-86 |
| Open Flash Point, °C | 204 | GB/T 3536 |
| Chroma, number | +30 | GB/T 3555 |
| Kinematic Viscosity (40°C), mm²/s | 17.58 | GB/T 265 |
| Kinematic Viscosity (100°C), mm²/s | 3.974 | GB/T 265 |
| Viscosity Index | 124 | GB/T 1995 |

### Example 8

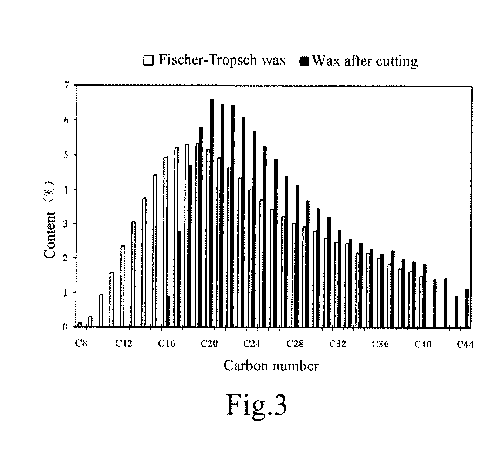

An Fischer-Tropsch wax is a hydrocarbon product with high-carbon-number long-chain normal paraffins as the main component synthesized in the presence of a Co-based catalyst. The wax mainly includes C₈ to C₄₅ normal paraffins, and the distribution of maximum carbon number is around C₁₈. After cutting off components distillated at less than 320°C, the distribution of maximum carbon number of the Fischer-Tropsch wax is slight shifted to a higher carbon number. Fig. 3 shows carbon number distribution of a product synthesized in the presence of a Co-based catalyst and an Fischer-Tropsch wax after cutting off components distillated at less than 320°C by atmospheric distillation. The Fischer-Tropsch wax substantially does not contain impurities such as sulfur and nitrogen and aromatic hydrocarbons, and needs not to be subjected to a hydrorefining reaction to remove sulfur and nitrogen, and needs not to be subjected to a hydrorefining reaction to improve the viscosity index, and can be directly subjected to an isomerization-asymmetrical cracking/hydrofinishing shown in Fig. 6. The experimental device of isodewaxing is the same as that in Comparative Example 1, the components distillated at more than 320°C in the Fischer-Tropsch wax was used as a feed stock, of which the physical and chemical properties are shown in Table 22. Under the process conditions shown in Table 23, the resulting product distribution is shown in Table 24, and main properties of the product are shown in Table 25. It can be seen from Tables 22 to 25 that, the distribution of the product after the isomerization-asymmetrical cracking/hydrofinishing has the feature of bimodal distribution. Meanwhile, the cloud point of the 2cst base oil product achieves -6°C, and the viscosity index is up to 162.

**Table 22 Properties of the feed stock of Example 8**

| Analysis Item | Fischer-Tropsch wax | Analysis Standard |
|---|---|---|
| 20°C Density, g/cm³ | 0.8536 | GB/T 1884 |
| 100°C Viscosity, mm²/s | 4.673 | GB/T 265 |
| Pour Point, °C | 59 | GB/T 3535 |
| Sulfur Content, µg/g | Not detected | ASTM D2622 |
| Nitrogen Content, µg/g | Not detected | ASTM D5762 |
| Distillation Range, °C HK | 316 | |
| 5% | 366 | |
| 10% | 375 | |
| 30% | 397 | |
| 50% | 409 | ASTM D2887 |
| 70% | 425 | |
| 90% | 495 | |
| 95% | 531 | |
| KK | 549 | |

**Table 23 Process conditions of Example 8**

| Process Condition | Isomerization-Asymmetrical Cracking | Supplementary Refining |
|---|---|---|
| Average Temperature, °C | 360 | 230 |
| Hydrogen Partial Pressure, MPa | 12.4 | 12.4 |
| Volume Space Velocity, h⁻¹ | 0.5 | 0.85 |
| Raito of Hydrogen to Oil, Nm³/Nm³ | 750 | 750 |

**Table 24 Product distribution of Example 8**

| Product | Product Yield, % |
|---|---|
| Fuel Gas + Naphtha | 23.7 |
| Diesel | 6.63 |
| 2cst Base Oil Yield | 69.67 |

**Table 25 Properties of the product of Example 8**

| Product | 2cst Base Oil | Analysis Method |
|---|---|---|
| 20°C Density, g/cm³ | 0.8416 | GB/T 1884 |
| Pour Point, °C | -15 | GB/T 3535 |
| Cloud Point, °C | -6 | GB/T 6986-86 |
| Open Flash Point, °C | 179 | GB/T 3536 |
| Chroma, number | +30 | GB/T 3555 |
| 40°C Kinematic Viscosity, mm²/s | 9.756 | GB/T 265 |
| 100°C Kinematic Viscosity, mm²/s | 2.912 | GB/T 265 |
| Viscosity Index | 162 | GB/T 1995 |

### Industrial applicability

In the present invention, the highly waxy heavy fraction oil having an initial boiling point of 300°C to 460°C, a wax content of no lower than 5%, a pour point of no lower than -20°C, and a cloud point of no lower than -5°C is used as a feed stock to produce a API (American Petroleum Institute) Group II or Group III (see the classification standard in Table 1) type lubricating base oil having a low pour point and a high viscosity index by a hydrorefining-isomerization/asymmetrical cracking-hydrofinishing three-stage hydrogenation process, wherein a critical reaction process of hydrogenation isomerization-asymmetrical cracking is involved. The isomerization/asymmetrical cracking reaction include two chemical reactions, namely, an isomerization reaction and an asymmetrical cracking reaction. When the isomerization is carried out, the linear paraffins having a high pour point and big-molecular and less-branched iso-paraffins with high pour point and high viscosity index in the feed stock are subjected to an asymmetrical cracking reaction at the same time. The so-called asymmetrical cracking reaction refers to a hydrocracking reaction occurs at a C-C bond close to the two ends of the paraffin, and a big-molecule and a small molecule are generated, wherein the small molecule belongs to the gas and naphtha fraction, and the big-molecule belongs to the lubricating base oil fraction.

In the asymmetrical cracking reaction, a 10-membered ring composite molecular sieve having a special pore structure is used as a catalyst support to enhance the restriction of the catalyst pores on the internal diffusion of normal paraffins and less-branched iso-paraffins, such that the cracking reaction preferably occurs at a position close to the two ends of the normal paraffins, thereby significantly improving the yield of the base oil product, especially that of the heavy base oil product.

The isomerization/asymmetrical cracking reaction is characterized in that the product has a bimodal distribution, that is, the yields of the light components (gas and naphtha) and the heavy base oil having a low pour point and a low cloud point are high, and the yield of a middle fraction oil (kerosene and diesel) is low. The method can solve the problems of low yield of target product, high pour point and cloud point, high aromatic content and low viscosity index and the like in the production of lubricating base oil from heavy highly waxy oil by physical processes such as solvent refining and solvent dewaxing and/or chemical processes such as hydrotreating, catalytic dewaxing, hydrotreating and hydrocracking. The process has the advantages of good adaptability to heavy highly waxy feed stock, high yield of the heavy base oil product with good properties such as viscosity, viscosity index, pour point and cloud point of the product and co-production of naphtha and a small amount of a middle fraction oil.

**Table 1 API lubricating base oil Classification standard**

| Class | Saturated Hydrocarbon Content, % | Sulfur Content, % | Viscosity Index |
|---|---|---|---|
| I | <90 | and/or >0.03 | 80~120 |
| II | ≮90 | ≯ 0.03 | 80~120 |
| III | ≮90 | ≯ 0.03 | >120 |
| IV | poly-α-olefin (PAO) | | |
| V | Various base oils except I~IV | | |

## Claims

1. A method for producing a lubricating base oil with a low cloud point and a high viscosity index, wherein the cloud point is lower than -5°C, and the viscosity index is higher than 120, the method comprises: producing a lubricating base oil by a hydrorefining-isomerization/asymmetrical cracking-hydrofinishing in the presence of hydrogen, wherein a highly waxy heavy fraction oil having an initial boiling point of 300°C to 460°C, a wax content of 5% or more, a pour point of -20°C or more and a cloud point of -5°C or more is used as a raw material;
(1) during the hydrorefining process, a wax-containing heavy feed stock contacts a pre-refining catalyst, and is subjected to desulfurization, denitrogenation, aromatic saturation and a ring-opening reaction, a light product generated in the hydrorefining process is separated by a stripping column as a byproduct, and a heavy product enters an isomerization-asymmetrical cracking process;
the operating conditions of the hydrorefining process are: reaction temperature: 350°C to 410°C, hydrogen partial pressure: 10 MPa to 18 MPa, space velocity: 0.5 h⁻¹ to 2.0 h⁻¹, volume ratio of hydrogen to oil: 300 Nm³/m³ to 1000 Nm³/m³;
the pre-refining catalyst comprises 60 wt% to 90 wt% of one or more of alumina, silica and titania, and 10 wt% to 40 wt% of one or more of molybdenum trioxide, tungsten trioxide, nickel oxide and cobalt oxide;
(2) during the hydrogenation isomerization-asymmetrical cracking process, the heavy product generated in the hydrorefining process contacts an isomerization-asymmetrical cracking catalyst, wax-containing component having a high pour point is subjected to an isomerization-asymmetrical cracking reaction, and is converted into a an isomer and an asymmetrical cracking product having a low pour point, which then directly enters a hydrofinishing process;
the operating conditions of the hydrogenation isomerization-asymmetrical cracking process are: reaction temperature: 260°C to 410°C, hydrogen partial pressure: 10 MPa to 18 MPa, volume space velocity: 0.5 h⁻¹ to 3.0 h⁻¹, volume ratio of hydrogen to oil: 300 Nm³/m³ to 1000 mm³/m³;
the catalyst: the content of mesoporous molecular sieve is 40% to 80%, the content of Pt and/or Pd is 0.3 wt% to 0.7 wt%, and alumina as the balance;
(3) during the hydrofinishing process, an isomerization-asymmetrical cracking reaction product having a low pour point contacts a hydrofinishing catalyst, residual aromatics and olefins generated by the asymmetrical cracking reaction are hydrogenated and saturated, and the resulting product is separated by a fractionating column to obtain a lubricating base oil and gaseous hydrocarbons, naphtha and middle fraction oil;
the catalyst comprises amorphous silica-alumina and at least one group VIII noble metal, the weight ratio of SiO₂:Al₂O₃ is 1:1 ~9, the average pore size is 1.0 nm to 5.0 nm, the pore volume is 0.3 ml/g to 1.0 ml/g, the BET specific surface area is 260 m²/g to 450 m²/g; the noble metal is Pt and/or Pd, and the content of the noble metal is 0.3 wt% to 0.6 wt%; and
the hydrofinishing reaction conditions are: reaction temperature: 180°C to 320°C, hydrogen partial pressure: 10MPa to 18MPa, volume space velocity: 0.5 h⁻¹ to 3.0 h⁻¹, volume ratio of hydrogen to oil: 300 Nm³/m³ to 1000 Nm³/m³.

2. The method for producing a lubricating base oil with a low cloud point of and a high viscosity index according to claim 1, wherein the heavy feed stock comprises anyone of furfural refined oil, foots oil, cerate, propane deasphalted oil, hydrocracking UCO, vacuum gas oil and Fischer-Tropsch wax or a mixture thereof.

3. The method for producing a lubricating base oil with a low cloud point of and a high viscosity index according to claim 1, wherein the mesoporous molecular sieve used in the hydrogenation isomerization-asymmetrical cracking reaction catalyst is one of a ZSM-22/ZSM-23 composite molecular sieve, a ZSM-23/ZSM-22 composite molecular sieve, a ZSM-22/SAPO-11 composite molecular sieve, a ZSM-23/SAPO-11 composite molecular sieve, a ZSM-5/SAPO-11 composite molecular sieve and an EU-1/SAPO-11 composite molecular sieve.
